# FASCICULE DE BREVET EUROPEEN

(11) **EP 4 638 173 B1**
(45) Date de publication et mention de la délivrance du brevet: **07.10.2026**
(21) Numéro de dépôt: 23836423.6
(22) Date de dépôt: 19.12.2023
(51) Int. Cl.: B60K 15/063, B60K 15/067, B60K 15/03, B62D 21/16, B62D 25/08, B60K 15/07, B60K 15/073

(54) **CHÂSSIS POUR UN VÉHICULE COMPRENANT UN RÉSERVOIR**
FAHRGESTELL FÜR EIN FAHRZEUG MIT EINEM TANK
CHASSIS FOR A VEHICLE, COMPRISING A TANK

(30) Priorité: 21.12.2022 FR 2214040
(43) Date de publication de la demande: 29.10.2025
(73) Titulaire: AMPERE s.a.s., 92100 Boulougne-Billancourt (FR)
(72) Inventeur: CHRISTOU, Panagiotis, 78280 GUYANCOURT (FR); GOBRECHT, Jérémi, 78280 GUYANCOURT (FR); GRENIER, Laurent, 78280 GUYANCOURT (FR); MOUSSI, Kamel, 78280 GUYANCOURT (FR)
(74) Mandataire: Renault Group
(86) Numéro de dépôt international: PCT/EP2023/086638
(87) Numéro de publication internationale: WO 2024/133257

(56) Documents cités:
- EP-A1- 2 239 185
- DE-A1- 102013 007 976
- FR-A1- 2 888 915
- FR-A1- 2 962 968
- FR-A1- 3 026 067
- JP-A- 2001 260 946

## Description

### Domaine Technique de l'invention

L'invention concerne un châssis pour un véhicule comprenant un réservoir destiné à stocker un fluide énergétique, notamment de l'hydrogène. L'invention porte aussi sur un agencement pour un véhicule comprenant un tel châssis. L'invention porte encore sur un véhicule, notamment un véhicule automobile, comprenant un tel châssis et/ou un tel agencement.

### Etat de la technique antérieure

Afin de rendre l'utilisation des véhicules moins polluante, on connaît des véhicules équipés d'une pile à combustible alimentée en énergie par de l'hydrogène. Ces véhicules embarquent donc un réservoir dans lequel de l'hydrogène est stocké avant d'être consommé par la pile à combustible. La pression de l'hydrogène dans ces réservoirs peut être très importante, par exemple de l'ordre de 700 Bar. Les réservoirs doivent donc être particulièrement résistants aux contraintes mécaniques exercées par l'hydrogène sous pression. De plus, l'hydrogène est un gaz hautement inflammable qui provoque des risques d'incendie en cas de fuite. Les réservoirs d'hydrogène doivent donc aussi être résistants aux chocs, de manière à garantir la sécurité des passagers en cas d'accident du véhicule.

Les réservoirs connus de l'état de la technique prennent généralement la forme d'une ou plusieurs bonbonnes embarquées dans le véhicule, par exemple des bonbonnes positionnées sous des sièges du véhicule. Ces réservoirs sont très lourds. Non seulement les réservoirs font augmenter le poids total du véhicule mais ils requièrent également un châssis renforcé pour les maintenir. Le châssis est donc également plus massif, ce qui va à l'encontre de l'objectif de fournir un véhicule plus économe en énergie. De plus, les réservoirs sont également très volumineux et leur intégration dans un véhicule pénalise le volume disponible pour les passagers ou pour ranger des objets. En particulier lorsque les réservoirs sont positionnés sous les sièges des véhicules, l'assise de ces sièges peut être surélevée ce qui nuit à l'habitabilité du véhicule. Enfin, ces réservoirs sont aussi complexes à fixer de manière fiable et stable au sein du véhicule. EP2239185A1 décrit un châssis pour un véhicule selon le préambule de la revendication 1.

### Présentation de l'invention

Le but de l'invention est de fournir un châssis pour un véhicule remédiant aux inconvénients ci-dessus et améliorant les châssis connus de l'art antérieur.

Plus précisément, un premier objet de l'invention est de fournir un véhicule équipé d'un réservoir destiné à stocker un fluide énergétique tel que de l'hydrogène qui soit relativement léger, simple à assembler et qui permettent de conserver un volume relativement important pour des passagers ou pour du rangement.

### Résumé de l'invention

L'invention se rapporte à un châssis pour un véhicule, comprenant un premier longeron, un deuxième longeron et un réservoir destiné à stocker un fluide énergétique, les longerons s'étendant parallèlement à un axe longitudinal, le réservoir étant agencé dans un prolongement des longerons suivant l'axe longitudinal et fixé aux longerons, le réservoir étant destiné à supporter une charge exercée par au moins un équipement embarqué dans le véhicule et/ou par des éléments de carrosserie du véhicule.

Les longerons peuvent être fixés respectivement contre deux parois latérales opposées du réservoir.

Le réservoir peut comprendre une paroi supérieure pourvu d'un renfoncement destiné à recevoir l'assise d'au moins un siège.

Le réservoir peut comprendre un dispositif anti sous-marinage configuré pour empêcher une assise d'un siège de glisser vers l'avant en cas d'accident.

L'invention se rapporte également à un agencement pour un véhicule, comprenant un châssis tel que défini précédemment, l'agencement comprenant en outre au moins un équipement et/ou des éléments de carrosserie supportés par le réservoir et fixés au réservoir.

L'agencement peut comprendre au moins un équipement supporté par le réservoir et fixé au réservoir, l'au moins un équipement comprenant au moins un siège et/ou un dispositif de sécurité destiné à maintenir un passager en cas d'accident.

L'agencement peut comprendre :
- un moyen d'ancrage pour une ceinture de sécurité fixé à une paroi supérieure du réservoir, et/ou
- un moyen d'ancrage selon la norme ISO 13216-1:1999 fixé à une paroi supérieure du réservoir.

Le réservoir peut comprendre une paroi supérieure pourvue d'un renfoncement destiné à recevoir l'assise d'au moins un siège, et:
- le moyen d'ancrage pour une ceinture de sécurité fixé peut être fixé à un fond du renfoncement, et/ou
- le moyen d'ancrage selon la norme ISO 13216-1:1999 peut comprendre un arceau s'étendant horizontalement à l'aplomb du renfoncement.

L'agencement peut comprendre des éléments de carrosserie supportés par le réservoir et fixés à une moitié arrière du réservoir, les longerons étant fixés à une moitié avant du réservoir.

L'invention se rapporte également à un véhicule, notamment véhicule automobile, comprenant un châssis tel que défini précédemment et/ou un agencement tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique de profil d'un véhicule automobile selon un mode de réalisation de l'invention.
La figure 2 est une vue partielle et en perspective, de dessus, d'un châssis du véhicule.
La figure 3 est une vue de côté d'un réservoir du véhicule, des équipements étant fixés à une paroi supérieure du réservoir.
La figure 4 est une vue de dessus du réservoir de la figure 3.
La figure 5 est une vue partielle et en perspective, de dessous, du châssis du véhicule.
La figure 6 est une vue en perspective de dessous du réservoir, le réservoir étant pourvu d'un carter de protection.
La figure 7 est une vue en coupe longitudinale et verticale du réservoir.
La figure 8A est une vue partielle et en perspective d'un mode de réalisation d'un réservoir du véhicule.
La figure 8B est une vue en transparence du réservoir de la figure 8A.
La figure 9 est une vue en coupe d'une interface de fixation du réservoir selon un premier mode de réalisation.
La figure 10 est une vue en coupe d'une interface de fixation du réservoir selon un deuxième mode de réalisation.

### Description détaillée

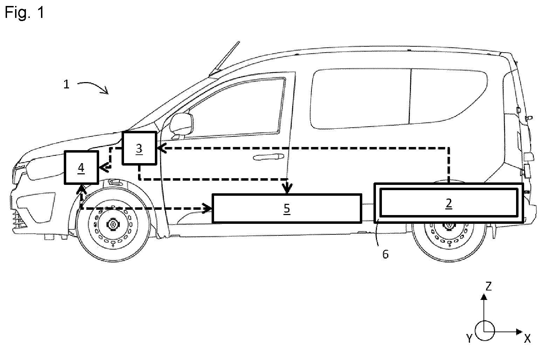

La figure 1 illustre schématiquement un véhicule 1 automobile selon un mode de réalisation de l'invention. Le véhicule 1 peut être, par exemple, un véhicule particulier ou un véhicule utilitaire. En variante, il pourrait être un camion, un bus, un engin de levage, un engin agricole ou même tout autre type de véhicule terrestre. L'invention peut également être adaptée à un aéronef ou à un bateau.

Dans ce document, l'axe X désigne l'axe longitudinal du véhicule 1. En marche avant et en ligne droite, le véhicule 1 progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule 1. L'axe Z désigne l'axe perpendiculaire à l'axe X et à l'axe Y. On considère que le véhicule 1 repose sur un sol horizontal. L'axe Z est un axe vertical, orienté de bas en haut. Les axes X, Y et Z forment un repère orthogonal. Ce repère défini en relation au véhicule 1 pourra être utilisé pour décrire un réservoir 2 du véhicule 1, même considéré en dehors du véhicule, puisque le réservoir est destiné à être intégré dans le véhicule selon une orientation particulière.

Le véhicule 1 est équipé d'un réservoir 2 selon un mode de réalisation de l'invention. Le réservoir 2 est destiné à contenir un fluide énergétique, c'est-à-dire un fluide formant une réserve d'énergie convertible en une force électromotrice apte à déplacer le véhicule. Le réservoir 2 est donc un organe du véhicule 1 qui lui confère une certaine autonomie. Le réservoir comprend notamment une ouverture d'entrée permettant de remplir le réservoir avec un fluide énergétique et une ouverture de sortie pour délivrer puis consommer le fluide énergétique contenu dans le réservoir.

Selon un mode de réalisation préféré, le réservoir 2 est destiné à stocker de l'hydrogène ou plus précisément du dihydrogène. Le véhicule 1 comprend une pile à combustible 3 apte à transformer de l'hydrogène en un courant électrique et un moteur électrique 4 alimenté en énergie par un courant électrique issu de la pile à combustible 3. Le véhicule 1 peut également comprendre une batterie électrochimique 5, par exemple de type lithium-ion. La batterie électrochimique 5 peut être rechargée par un courant électrique issu de la pile à combustible 3 et/ou par une connexion à un réseau de distribution d'électricité. Le moteur électrique 4 peut aussi être alimenté en énergie par un courant électrique issu de la batterie électrochimique 5. Le réservoir 2 associé à la pile à combustible 3 peut ainsi faire fonction de prolongateur d'autonomie du véhicule, lorsque la batterie électrochimique 5 est déchargée.

En variante, l'architecture du véhicule 1 pourrait être différente. Le véhicule 1 pourrait ne pas comprendre de batterie électrochimique, de sorte que le réservoir 2 constitue l'unique source d'énergie du véhicule 1. Selon une autre variante, le véhicule pourrait comprendre un moteur à combustion interne alimenté en énergie par de l'hydrogène au lieu d'une pile à combustible. Selon d'autres variantes, le réservoir 2 pourrait être configuré pour stocker d'autres formes de gaz énergétiques, par exemple du gaz de pétrole liquéfié ou du gaz naturel. Le réservoir pourrait même être destiné à stocker un carburant liquide tel que de l'essence, du gazole ou encore de l'éthanol.

Le réservoir 2, que l'on pourrait dénommer "dispositif de stockage", est destiné à stocker un fluide énergétique sous pression, c'est-à-dire à une pression strictement supérieure à la pression atmosphérique. En l'espèce, le réservoir 2 est destiné à stocker le fluide énergétique, notamment de l'hydrogène, à une pression supérieure ou égale à 700 Bar. En variante, le réservoir 2 pourrait être destiné à stocker le fluide énergétique à une pression différente, par exemple une pression supérieure ou égale à 300 Bar, ou 500 Bar, ou 1000 Bar, ou encore toute autre valeur. Le réservoir 2 comprend ainsi une structure 6 rigide apte à supporter les efforts exercés par le fluide sous pression qu'il contient, c'est-à-dire des efforts centrifuges agissant depuis l'intérieur du réservoir 2 et qui tendent à le faire éclater.

En outre, le réservoir peut avoir une contenance supérieure ou égale à 50 litres, de préférence supérieure ou égale à 100 litres, voire même supérieure ou égale à 150 litres. Un réservoir de 100 litres permet de stocker environ 4 kg d'hydrogène à 700 Bar, ce qui confère une autonomie de l'ordre de 300 km à un véhicule automobile.

La structure 6 du réservoir est également apte à supporter des chocs importants, notamment des chocs se produisant en cas d'accident du véhicule 1, sans générer de fuite du fluide énergétique vers l'extérieur. Les données d'accidentologie et/ou des simulations et/ou des crash test permettent de dimensionner la structure 6, notamment des épaisseurs de parois requises, de sorte à ce qu'aucune fuite de fluide énergétique ne se produise, même pour les accidents les plus violents.

Selon l'invention, le réservoir 2, dont la grande résistance est nécessaire pour supporter des pressions élevées du fluide énergétique qu'il contient ainsi que pour garantir la sécurité des passagers du véhicule 1 en cas d'accident, est avantageusement mis à profit pour former un élément structurel du véhicule. Un élément structurel désigne un élément du véhicule participant à la rigidité globale du véhicule. Autrement dit, le réservoir 2 forme une partie de la caisse du véhicule, c'est-à-dire une partie de l'ossature du véhicule. En particulier, le réservoir 2 forme une partie du châssis du véhicule, c'est à dire une partie du véhicule apte à supporter le poids exercé par d'autres équipements du véhicule, comme par exemple le poids exercé par une partie au moins de la carrosserie du véhicule. De plus, non seulement le réservoir supporte le poids de certains équipements, mais il fournit également un support permettant de fixer ces équipements.

En particulier, la caisse du véhicule 1 ne présenterait pas une rigidité suffisante si on ne l'équipait pas du réservoir 2. C'est-à-dire que la caisse du véhicule 1 dépourvue du réservoir 2 se déformerait facilement, notamment sous le seul poids des équipements embarqués dans le véhicule ou bien en cas de collision du véhicule 1, même à très faible vitesse. Le réservoir 2 constitue donc un élément de la caisse du véhicule 1 indispensable à sa rigidité et à sa robustesse. L'intégration du réservoir 2 à la caisse permet donc de réduire considérablement la quantité de matériau mis en œuvre pour réaliser le véhicule. Grâce à l'invention, on peut raccourcir, voire même supprimer certains éléments métalliques traditionnellement utilisés pour concevoir la caisse et notamment le châssis d'un véhicule.

L'invention est donc particulièrement originale en ce que le réservoir 2, qui classiquement était supporté par la caisse, en devient un élément constitutif. De surcroit, l'invention va à l'encontre de l'idée reçue selon laquelle un réservoir devrait être fortement protégé en raison du caractère inflammable ou explosif du fluide énergétique qu'il contient. Selon cette idée reçue, le réservoir ne devrait supporter, en condition normale d'utilisation, aucune autre contrainte que celle exercée par le fluide énergétique qu'il contient.

Selon l'invention, le réservoir est apte à supporter des charges qui peuvent atteindre au moins cent kilogrammes, voire plusieurs centaines de kilogrammes. Ces charges peuvent être des charges statiques comme par exemple celles qui sont exercées par le poids de la carrosserie du véhicule, et/ou le poids d'équipements tels que des sièges du véhicule et/ou le poids des passagers du véhicule. Ces charges peuvent également être des charges dynamiques comme celles qui apparaissent dans des situations particulières comme par exemple lors d'un choc contre le véhicule. Ces différentes charges statiques ou dynamiques peuvent exercer des efforts de compression ou de cisaillement sur le réservoir. Ces efforts sont donc orientés dans une direction différente des efforts centrifuges exercés par le fluide énergétique sous pression à l'intérieur du réservoir. Avantageusement, la résistance du réservoir nécessaire pour résister à la pression exercée par le fluide énergétique qu'il contient est donc aussi utilisée pour supporter des charges qui s'exercent dans des directions différentes.

Parmi les équipements du véhicule qui peuvent être supportés par le réservoir 2 et fixés au réservoir figurent notamment :
- des équipements destinés à être agencés dans un habitacle du véhicule, notamment des sièges sur lesquels des passagers du véhicule peuvent s'assoir, et/ou
- des dispositifs de sécurité tels que des ceintures de sécurité.
- des éléments de carrosserie, et/ou
- un dispositif d'absorption de choc, et/ou
- un train de roue, et/ou
- un carter de protection.

Plus généralement, le réservoir 2 peut servir à maintenir tout organe ou équipement embarqué dans le véhicule. En particulier, le réservoir peut supporter tout équipement étranger à un système de stockage ou à un système de distribution du fluide énergétique. Le réservoir peut aussi servir à relier plusieurs éléments de caisse entre eux. Ainsi, on peut aussi envisager de faire supporter au réservoir 2 et de fixer au réservoir 2 : une batterie électrochimique destinée à alimenter un groupe motopropulseur du véhicule, et/ou un groupe motopropulseur, et/ou des moyens de transmission entre le un groupe motopropulseur et des roues motrices, et/ou des moteurs roues, et/ou des moyens de suspension.

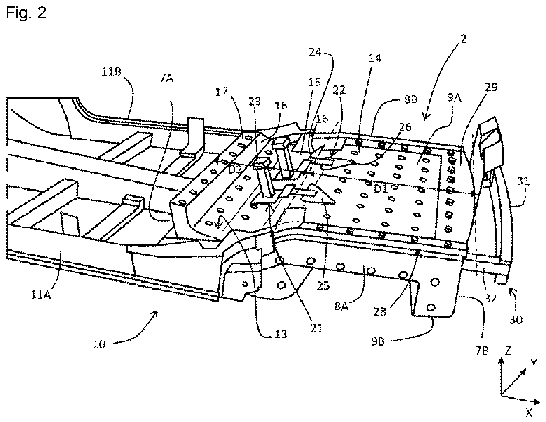

En référence à la figure 2, le réservoir 2 peut comprendre une forme globalement parallélépipédique. Il peut ainsi comprendre trois paires de parois opposées. Une première paire de parois opposées est composée d'une paroi avant 7A et d'une paroi arrière 7B. Les parois 7A et 7B s'étendent sensiblement parallèlement aux axes Y et Z. Une deuxième paire de parois opposées est composée d'une paroi latérale gauche 8A et d'une paroi latéral droite 8B. Les parois 8A et 8B s'étendent sensiblement parallèlement aux axes X et Z. Une troisième paire de parois opposées est composée d'un paroi supérieure 9A et d'une paroi inférieure 9B. Les parois 9A et 9B s'étendent sensiblement parallèlement aux axes X et Y. En variante, toute autre forme du réservoir pourrait être envisagée.

Le réservoir 2 peut être agencé en partie arrière du véhicule. En particulier, le réservoir peut former une partie arrière du châssis 10 du véhicule, c'est-à-dire une partie arrière du soubassement du véhicule. Le châssis 10 peut comprendre deux longerons 11A, 11B s'étendant parallèlement à l'axe X de part et d'autre du véhicule. Ces deux longerons 11A, 11B peuvent s'étendre vers l'arrière uniquement jusqu'à l'avant d'un passage de roues arrière du véhicule, c'est-à-dire que l'extrémité arrière des longerons 11A, 11B est positionnée à l'avant des roues arrières du véhicule. Les longerons 11A, 11B peuvent ainsi être plus courts que sur un véhicule automobile conventionnel. Le réservoir 2 est fixé directement à chacun des deux longerons. En reliant entre eux les deux longerons 11A, 11B, le réservoir 2 joue donc le rôle d'une traverse du véhicule. Le réservoir 2 permet donc de maintenir rigidement en position les deux longerons l'un par rapport à l'autre. L'utilisation du réservoir 2 permet donc d'économiser une ou plusieurs traverses dans le châssis 10. En tout état de cause, le véhicule 1 ne comprend aucune traverse structurelle reliant deux longerons au-dessus ou en dessous du réservoir 2. Le véhicule ne comprend pas non plus de traverse structurelle à l'arrière du réservoir 2 ou directement devant le réservoir 2.

Le réservoir 2 s'étend vers l'arrière du véhicule 1 dans le prolongement longitudinal des deux longerons, c'est-à-dire que l'extrémité arrière du réservoir 2, notamment la paroi arrière 7B, est positionnée plus à l'arrière que l'extrémité arrière des longerons 11A, 11B. La distance D1 selon l'axe longitudinal entre l'extrémité arrière des longerons 11A, 11B et un bord arrière du réservoir 2 peut être, de préférence, supérieure ou égale à 20 cm, voire supérieure ou égale à 40 cm, voire même supérieure ou égale à 60cm. Le réservoir 2 peut ainsi s'étendre sous un coffre du véhicule, voire même jusqu'au niveau d'un parechoc arrière du véhicule. Le réservoir peut ainsi être destiné à supporter la charge exercée par l'ensemble des objets rangés dans le coffre du véhicule.

Afin d'assurer une bonne fixation entre les longerons 11A, 11B et le réservoir 2, il est préférable de prévoir un recouvrement longitudinal entre ces composants, c'est-à-dire qu'un bord avant du réservoir est positionné plus à l'avant que l'extrémité arrière des longerons 11A, 11B. Ainsi, on évite un effet de charnière de l'interface entre les longerons et le réservoir sous l'effet d'une charge verticale ou en cas de choc longitudinal. La distance D2 selon l'axe longitudinal entre l'extrémité arrière des longerons 11A, 11B et le bord avant du réservoir 2 peut-être de préférence supérieure ou égale à 10 cm, voire supérieure ou égale à 20 cm, voire supérieure ou égale à 40 cm. En particulier, les longerons 11A, 11B ne s'étendent de préférence pas au-delà de la moitié du réservoir 2 selon l'axe longitudinal X. Chaque longeron 11A, 11B peut être fixé respectivement aux deux parois latérales 8A et 8B du réservoir.

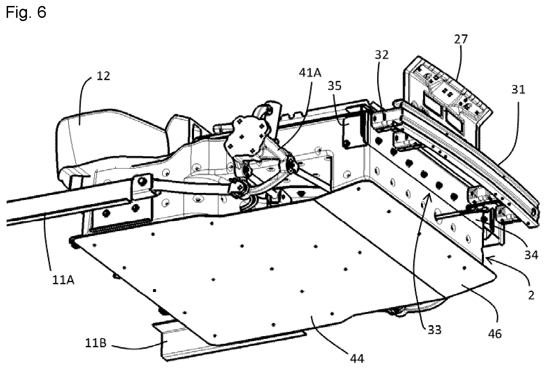

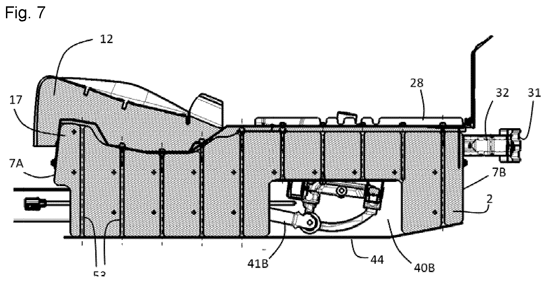

Le réservoir 2 peut s'étendre sensiblement sous l'assise de sièges 12 du véhicule 1, notamment des sièges arrières. Les sièges 12 (dont l'assise est visible sur les figures 6 et 7) peuvent indifféremment se présenter sous forme de sièges individuels ou sous la forme d'une banquette sur laquelle plusieurs personnes peuvent s'assoir côte-à-côte. Les sièges 12 peuvent être supportés par le réservoir et fixés au réservoir. Les sièges 12 peuvent être des sièges rabattables et des supports d'axe de rotation du dossier des sièges peuvent également être fixés au réservoir 2.

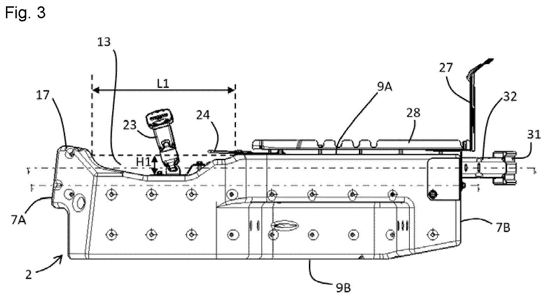

La paroi supérieure 9A peut comprendre un renfoncement 13 destiné à recevoir l'assise des sièges 12, de manière à ce que les passagers assis sur ces sièges ne soient pas installés trop haut. Ce renfoncement 13 est nommant bien visible sur la figure 3. A l'arrière du renfoncement 13, la paroi supérieure 9A comprend un plan horizontal 14. Le plan horizontal 14 peut être destiné à former un plancher de coffre. Le renfoncement 13 s'étend à une hauteur moindre selon l'axe vertical Z que le plan horizontal 14 à l'arrière du renfoncement.

Le renfoncement 13 peut avoir une forme profilée parallèlement à l'axe transversal Y. Le renfoncement 13 peut comprendre un fond 15, notamment horizontal, encadré à l'avant et à l'arrière par des parois 16 inclinées. Le renfoncement 13 peut avoir une longueur L1 selon l'axe longitudinal X correspondant sensiblement à la longueur de l'assise des sièges 12 selon ce même axe, ou au moins 50% de la longueur de l'assise des sièges 12. Cette longueur peut être par exemple supérieure ou égale à 10 cm, de préférence supérieure ou égale à 20 cm. La différence de hauteur H1, selon l'axe vertical Z, entre le fond 15 du renfoncement 13 et le plan horizontal 14 à l'arrière du renfoncement peut être par exemple supérieur ou égal à 5 cm, de préférence supérieure ou égale à 10 cm. La hauteur selon l'axe Z du plan horizontal 14 à l'arrière du renfoncement 13 peut être librement choisie en fonction du d'un compromis entre volume de rangement du coffre et capacité du réservoir. Le renfoncement 13 peut être agencé dans une moitié avant de la paroi supérieure 9A tandis que le plan horizontal 14 peut être agencé dans une moitié arrière de la paroi supérieure 9A.

Le châssis 10 ne comprend pas d'élément structurel supplémentaire agencé entre le réservoir 2 et les sièges 12. Le poids et le volume occupé par ces composants peut ainsi être économisé. Une cloison de protection ou de séparation peut néanmoins être prévue entre les sièges et le réservoir et/ou entre le coffre et le réservoir, notamment pour améliorer l'esthétisme et le confort. Toutefois, cette cloison ne serait pas destinée à supporter les sièges ou des objets transportés dans le coffre et son épaisseur pourrait être réduite en conséquence.

Avantageusement, le réservoir 2 comprend également un dispositif anti sous-marinage 17. Un tel dispositif forme une butée empêchant l'assise des sièges 12 de glisser vers l'avant en cas d'accident. Le dispositif anti sous-marinage 17 est formé par une proéminence s'étendant vers l'avant et vers le haut devant le renfoncement 13. Le dispositif anti sous-marinage 17 peut comprendre une forme profilée selon l'axe Y et/ou s'étendre sur toute la largeur du réservoir selon l'axe Y. Comme cela est bien visible sur la figure 7, une face inférieure de l'assise du siège 12 peut comprendre une forme complémentaire à la forme du dispositif anti sous-marinage 17. La face inférieure de l'assise du siège 12 peut donc comprendre un creux profilé selon l'axe Y dans lequel est engagé la proéminence du dispositif anti sous-marinage 17. Outre l'amélioration de la sécurité des passagers, l'intégration du dispositif anti sous-marinage 17 au réservoir 2 permet d'augmenter le volume du réservoir et donc d'augmenter sa capacité de stockage en fluide énergétique.

Le réservoir 2 fournit également un support pour la fixation d'un dispositif de sécurité. Le dispositif de sécurité vise à protéger les passagers du véhicule en cas d'accident. En particulier, le dispositif de sécurité peut comprendre une ceinture de sécurité et/ou un dispositif selon la norme ISO 13216-1:1999, plus couramment dénommé système isofix. En particulier, un moyen d'ancrage 21 pour une ceinture de sécurité et/ou un moyen d'ancrage 22 selon la norme ISO 13216-1:1999 peuvent être fixés à une paroi supérieure 9A du réservoir. Les moyens d'ancrage 21, 22 peuvent être fixés, par exemple soudés ou vissés à une plaque, elle-même vissée contre le réservoir 2.

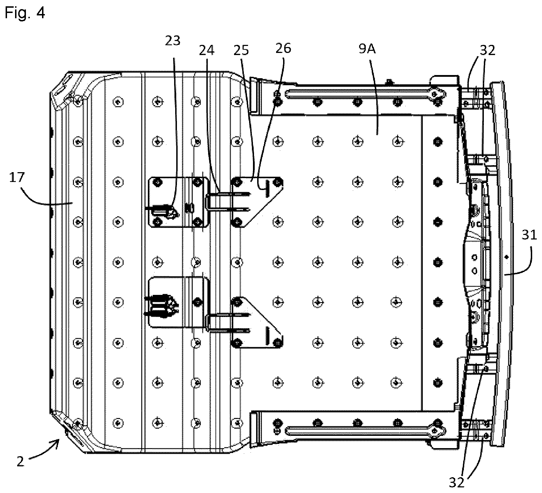

Ainsi, le réservoir 2 est destiné à supporter des efforts de traction importants exercés par les moyens d'ancrage en cas d'accident. Le moyen d'ancrage 21 peut être relié à un dispositif de clipage 23 d'une ceinture de sécurité, également dénommé pédoncule. Un tel dispositif de clipage 23 est saillant entre l'assise et un dossier du siège 12 positionné au-dessus du réservoir et il est destiné à être actionné par un passager pour verrouiller ou déverrouiller la ceinture de sécurité. Alternativement, le moyen d'ancrage 21 pourrait aussi être relié à un dispositif de renvoi de ceinture de sécurité, et/ou à un enrouleur de ceinture de sécurité, et/ou à un dispositif de blocage de ceinture de sécurité. Comme cela est bien visible sur les figures 3 et 4, le moyen d'ancrage 21 peut être fixé au fond 15 du renfoncement 13.

Le moyen d'ancrage 22 peut comprendre un arceau 24, notamment métallique et/ou en forme de U. Cet arceau 24 est destiné à coopérer avec un dispositif de fixation intégré à un siège amovible, par exemple un siège pour bébé, pour maintenir fermement ce siège amovible. L'arceau 24 peut s'étendre horizontalement à l'aplomb du renfoncement 13. En particulier, l'arceau 24 peut être soudé à une plaque 25 elle-même visée dans le réservoir au niveau d'un bord avant du plan horizontal 14.

Avantageusement, un ou plusieurs crochets d'arrimage 26 pour arrimer des bagages peuvent également être fixés au réservoir 2. Les crochets d'arrimage 26 peuvent être fixés contre le plan horizontal 14 situé à l'arrière du renfoncement 13. Comme cela est visible sur la figure 4, un crochet d'arrimage 26 peut éventuellement être fixé, notamment soudé, à la plaque 25 sur laquelle est soudée l'arceau 24. Alternativement le crochet d'arrimage 26 peut être fixé, notamment soudé, sur une plaque distincte.

Le réservoir 2 supporte également une partie arrière de la carrosserie. Cette partie arrière de la carrosserie peut comprendre par exemple des pieds s'étendant sensiblement verticalement jusqu'à un toit du véhicule, et/ou des ailes arrières ou custodes, et/ou une partie arrière d'un encadrement de porte arrière du véhicule, et/ou un hayon ou porte de coffre du véhicule ainsi qu'un encadrement d'un tel hayon. La partie de la carrosserie du véhicule supportée par le réservoir 2 peut être fixée au réservoir, notamment au niveau d'une moitié arrière de la paroi supérieur 9A du réservoir. A cet effet, le châssis 10 comprend un cadre 28 directement fixé au réservoir 2. Le cadre 28 peut être lui-même fixé directement à une partie de la carrosserie du véhicule ou même constituer un bord inférieur de la carrosserie. Le cadre 28 peut être agencé sur un pourtour de la paroi supérieure 9A du réservoir. Il peut comprendre globalement la forme d'un U. Le cadre 28 peut notamment comprendre un premier segment s'étendant le long d'un bord arrière du réservoir 2 et un deuxième et un troisième segment s'étendant le long des bords latéraux du réservoir. Le cadre 28 peut être prévu en matériau métallique et/ou présenter une forme de cornière. Le cadre 28 peut notamment comprendre une paroi 29 s'étendant contre la paroi supérieure 9A du réservoir. Ladite paroi 29 peut être fixée au réservoir par des moyens de fixation tels que des vis de fixation. Le nombre et/ou l'agencement des vis de fixation peuvent être librement choisis afin d'obtenir la rigidité et le maintien souhaités. En particulier, les vis de fixation peuvent être réparties selon un pas régulier, par exemple un pas compris entre 5 cm et 30 cm inclus, notamment entre 10cm et 20 cm inclus.

Un fond de coffre 27 est fixé directement au réservoir 2 ou est fixé au réservoir 2 par l'intermédiaire du cadre 28. Le fond de coffre 27 comprend une paroi arrière du coffre qui s'étend transversalement et verticalement sous la porte de coffre en position fermée. Des moyens de verrouillage de la porte de coffre comme par exemple un fil de gâche peuvent également être fixés au fond de coffre 27.

Le véhicule 1 comprend en outre un dispositif d'absorption de chocs 30 supporté par le réservoir 2 et fixé au réservoir 2. En particulier, le dispositif d'absorption de chocs 30 est fixé exclusivement au réservoir 2. Le dispositif d'absorption de chocs 30 n'est donc pas fixé aux longerons du véhicule, ni à une traverse métallique.

Le dispositif d'absorption de chocs 30 est destiné à absorber tout ou partie de l'énergie cinétique transférée au véhicule 1 en cas de choc contre le dispositif d'absorption de chocs 30. Le dispositif d'absorption de chocs 30 peut ainsi être intégré à un parechoc du véhicule. Le dispositif d'absorption de chocs 30 peut être recouvert par une pièce d'habillage du véhicule.

Selon le mode de réalisation présenté, le dispositif d'absorption de chocs 30 est agencé de sorte à supporter des chocs longitudinaux sur l'arrière du véhicule. Il est donc intégré à un parechoc arrière du véhicule. En variante, le dispositif d'absorption de chocs 30 pourrait être agencé de sorte à supporter des chocs longitudinaux sur l'avant du véhicule et donc être intégré à un parechoc avant.

Lorsqu'un choc se produit contre le dispositif d'absorption des chocs 30, un effort est automatiquement transmis au réservoir 2. Sa grande résistance et sa grande robustesse lui permettent de supporter cet effort sans endommagement ni déformation. L'effort du choc est transmis ensuite aux longerons 11A, 11B s'étendant plus à l'avant du réservoir 2. Le réservoir 2 fait donc fonction de pièce intermédiaire entre le dispositif d'absorption de chocs 30 et les longerons 11A, 11B. Autrement dit, le dispositif d'absorption de chocs 30 est relié aux longerons par l'intermédiaire du réservoir 2.

Le dispositif d'absorption de chocs 30 comprend une traverse de choc arrière 31, un ensemble de colonnettes 32 destinées à se déformer en cas de choc, et un support 33 destiné à être fixé directement contre le réservoir 2. La traverse de choc arrière 31 est fixée au réservoir par l'intermédiaire des colonnettes 32 et du support 33. Les colonnettes peuvent être dites "à déformation programmée", c'est-à-dire qu'elles peuvent être conçues pour se déformer d'une manière prévisible en cas de choc contre la traverse de choc arrière 31 de manière à optimiser la quantité d'énergie absorbée par la déformation et/ou de manière à bien maîtriser les modes de déformation du dispositif d'absorption de chocs 30. A cet effet, les colonnettes peuvent comprendre des points de faiblesse telles que des ouvertures ou des encoches.

La traverse de choc arrière 31 peut s'étendre au moins grossièrement parallèlement à l'axe transversal Y, à l'arrière du réservoir 2. Les colonnettes peuvent s'étendre parallèlement à l'axe longitudinal X entre la traverse de choc arrière 31 et la paroi arrière 7B du réservoir. Les colonnettes 32 comprennent ainsi une première extrémité fixée, par exemple soudée, au support 33 et une deuxième extrémité fixée, par exemple soudée, à la traverse de choc arrière 31. Les colonnettes peuvent comprendre une section carrée, rectangulaire ou de toute au de toute autre forme.

Selon une variante de réalisation, les colonnettes 32 pourraient aussi s'étendre en oblique par rapport à l'axe longitudinal X. L'axe selon lequel les colonnettes s'étend pourrait par exemple former un angle compris entre 0° et 30° avec l'axe longitudinal X, voire un angle compris entre 0° et 45°.

Selon un mode de réalisation, la traverse de choc arrière 31 pourrait être fixée au support 33 par l'intermédiaire d'une seule colonnette 32. Cette unique colonnette serait de préférence positionnée au centre du dispositif d'absorption de chocs 30. De préférence, la traverse de choc arrière 31 est fixée au support 33 par l'intermédiaire d'au moins deux colonnettes 32, voire au moins trois colonnettes 32, voire même au moins quatre colonnettes 32. Ces colonnettes 32 peuvent être réparties sur la largeur du réservoir 2, selon l'axe transversal Y. La figure 2 illustre un dispositif d'absorption de chocs comprenant deux colonnettes 32 tandis que les figures 3, 4 et 5 illustrent un dispositif d'absorption de chocs comprenant quatre colonnettes 32. Le nombre de colonnettes peut être quelconque. De préférence, les colonnettes sont espacées de sorte à ne pas interférer les unes avec les autres lorsqu'elles se déforment consécutivement à un choc.

Comme le réservoir 2 fournit une large paroi arrière 7B, on dispose d'une grande surface pour la fixation du dispositif d'absorption de chocs 30. On peut ainsi plus facilement augmenter le nombre de colonnettes supportant la traverse de choc arrière 31, ce qui augmente la capacité d'absorption d'énergie du dispositif d'absorption de chocs 30. L'invention permet ainsi un gain significatif par rapport aux véhicules équipés d'une traverse de choc arrière 31 fixée aux longerons du véhicule. En effet, dans de tels véhicules, seules deux colonnettes en vis-à-vis de chaque longeron sont prévues ce qui réduit la capacité d'absorption d'énergie.

Selon un mode de réalisation, une structure en nid d'abeilles pourrait être prévue entre la paroi arrière 7B du réservoir et la traverse de choc arrière 31, en remplacement ou en complément des colonnettes 32.

Comme la traverse peut être supportée par de plus nombreuses colonnettes et/ou par une structure en nid d'abeilles, la conception de la traverse de choc arrière 31 peut être simplifiée. La traverse de choc arrière 31 peut, par exemple, comprendre une simple forme rectiligne parallèle à l'axe transversal Y, c'est-à-dire une forme non courbée. La section de la traverse de choc arrière 31 peut par exemple avoir une forme de U. Une traverse en forme d'arc de cercle centré autour d'un axe parallèle à l'axe vertical Z est néanmoins également possible.

Le support 33 peut comprendre une plaque principale 34 s'étendant parallèlement à l'axe transversal Y et à l'axe vertical Z. Cette plaque principale 34 est fixée à la paroi arrière 7B du réservoir, notamment vissée au moyen d'un ensemble de vis de fixation passant au travers de trous prévus dans cette plaque. Comme la plaque principale 34 est soutenue par la paroi arrière 7B, la plaque principale 34 peut être relativement fine. La plaque principale 34 peut avoir par exemple une épaisseur inférieure ou égale à 2mm. La plaque principale n'est pas destinée à rigidifier davantage le réservoir. Elle peut uniquement servir à répartir la pression exercée par les colonnettes sur une plus grande surface en cas de choc. Il ne s'agit donc pas d'une traverse du châssis.

Le support 33 peut également comprendre des plaques auxiliaires 35 perpendiculaires à la plaque principale 34. Selon le mode de réalisation présenté, les plaques auxiliaires 35 s'étendent parallèlement à l'axe longitudinal X et à l'axe vertical Z et sont fixées respectivement sur les parois latérales 8A et 8B du réservoir, notamment au moyen de vis de fixation. La fixation du dispositif d'absorption des chocs 30 par les plaques latérales 35 en complément de la fixation par la plaque principale 34 améliore la tenue du dispositif d'absorption des chocs.

Selon une variante de réalisation, le support 33 pourrait ne comprendre qu'une seule plaque auxiliaire. Selon une autre variante de réalisation, le support 33 pourrait comprendre une plaque auxiliaire s'étendant parallèlement à l'axe longitudinal X et à l'axe transversal Y, et fixée sur la paroi supérieure 9A. Le support 33 pourrait également comprendre une plaque auxiliaire s'étendant parallèlement à l'axe longitudinal X et à l'axe transversal Y, et fixée sur la paroi inférieure 9B.

En cas de choc à l'arrière du véhicule, les colonnettes 32 se déforment et absorbent l'énergie du choc. En particulier, les colonnettes 32 se compriment entre la traverse 31 et la plaque principale 34, laquelle prend appui sur la paroi arrière du réservoir. L'onde de choc est transmise aux longerons 11A, 11B par l'intermédiaire du réservoir 2. Le réservoir comprend une structure 6 indéformable ou quasiment indéformable. Il transmet ainsi la totalité des efforts reçus aux longerons 11A, 11B. Si le choc est modéré, seules les colonnettes sont déformées. Les opérations de réparation du véhicule sont particulièrement simples car il suffit de dévisser le dispositif d'absorption de chocs 30 du réservoir 2 et de le remplacer par un dispositif d'absorption de chocs 30 neuf.

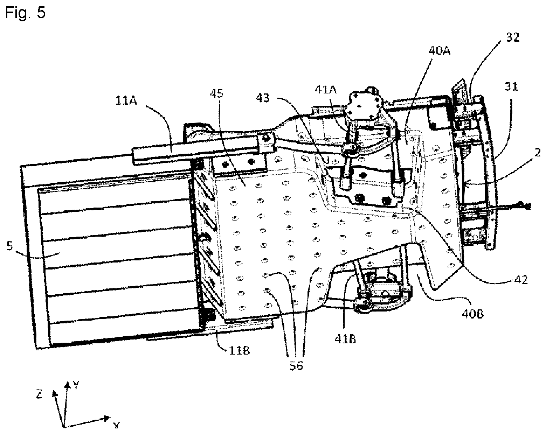

La figure 5 illustre le châssis 10 du véhicule par une vue de dessous. On observe que le réservoir 2 peut comprendre deux cavités 40A, 40B destinées à recevoir des éléments 41A, 41B d'un train de roues du véhicule 1. Ces cavités 40A, 40B sont ouvertes vers le bas et chacune vers un côté latéral du réservoir. Elles peuvent être délimitées par un ensemble de parois verticale 42 et par une paroi horizontale 43 s'étendant à mi-hauteur du réservoir. En ménageant les cavités 40A, 40B dans le réservoir 2, la paroi inférieure 9B du réservoir peut être particulièrement proche du sol en dehors de ces cavités. La paroi inférieure 9B comprend ainsi une zone 45 (sensiblement en forme de H selon le mode de réalisation présenté à la figure 5) qui s'étend horizontalement plus bas que les éléments 41A, 41B du train de roue. On peut ainsi augmenter la capacité du réservoir et abaisser le centre de gravité du véhicule, ce qui améliore sa stabilité.

Avantageusement, le véhicule 1 ne comprend aucune structure porteuse pour soutenir le réservoir 2 par le dessous. Grâce à sa grande résistance, le réservoir 2 peut être exposé à des chocs intervenant sous le dessous du véhicule par exemple un choc produit par la projection d'une pierre ou un choc causé par le franchissement d'un trottoir. Néanmoins, comme cela sera exposé ci-après, on peut prévoir de fixer un carter de protection sous le réservoir 2 de manière à fournir une protection supplémentaire.

Avantageusement, et comme illustré sur les figures 6 et 7, le véhicule comprend donc un carter de protection 44 fixé au réservoir 2. Le carter de protection 44 s'étend horizontalement sous le réservoir 2. Il peut être fixé directement au réservoir 2, sans pièce intermédiaire. Le carter de protection 44 possède une face supérieure faisant face à la paroi inférieure 9B du réservoir, et une paroi inférieure exposée aux projections en provenance de la route. Ainsi, la paroi inférieure 9B est protégée des impacts causés par la projection de pierres ou lors du franchissement de trottoirs.

Avantageusement, le carter de protection 44 ferme les cavités 40A, 40B par le dessous. Autrement dit, les cavités 40A, 40B sont délimitées par le dessous par des portions du carter de protection 44. Le carter de protection 44 permet ainsi de protéger les éléments 41A, 41B du train de roue.

Le carter de protection 44 est de préférence un élément monobloc, c'est à dire d'un seul tenant. Le carter de protection 44 fournit ainsi une meilleure protection contre les projections d'eau comparativement au carter de protection formé de plusieurs éléments assemblés ensemble. Il peut avoir une forme globalement rectangulaire. De préférence, le carter de protection 44 s'étend sous la totalité de la paroi inférieure du réservoir 2. Le carter de protection 44 s'étend donc sur toute la largeur du soubassement du véhicule selon l'axe transversal Y, jusqu'à proximité des roues reliées aux éléments 41A, 41B du train de roue du véhicule.

Le carter de protection permet de proposer un véhicule avec un fond plat. Un fond plat améliore l'aérodynamisme du véhicule et réduit le risque que des éléments étrangers au véhicule s'accrochent sur la face inférieure du carter de protection.

Le carter de protection 44 peut se trouver en plastique, en métal ou encore en tout autre matériau. Il peut comprendre plusieurs matières, notamment pour améliorer ses performances d'isolation acoustique.

Selon un mode de réalisation, le carter de protection 44 peut comprendre un déflecteur 46 configuré pour créer un effet de sol par circulation d'air. L'effet de sol est un effet aérodynamique destiné à plaquer le véhicule au sol et qui permet donc d'améliorer son adhérence sur le sol. Le déflecteur 46 peut comprendre une surface légèrement inclinée par rapport à l'axe longitudinal X. Cette surface inclinée peut s'étendre vers l'arrière et vers le haut en partie arrière du carter de protection 44. Alternativement ou en complément, le carter de protection 44, et notamment le déflecteur 46, peut aussi comprendre des ailettes saillantes vers le bas et s'étendant dans un plan parallèle à l'axe longitudinal X et à l'axe vertical Z. De telles ailettes améliorent la stabilité latérale du véhicule.

Le carter de protection 44 peut être exclusivement fixé au réservoir. Alternativement, le véhicule peut comprendre un élément de parechoc arrière positionné à l'arrière du carter de protection 44. Le carter de protection 44 peut être fixé à cet élément de parechoc arrière. Un chevauchement entre l'élément de parechoc arrière et le carter de protection peut être prévu afin d'améliorer la protection.

Avantageusement, le véhicule 1 peut également comprendre un élément de filtration acoustique intercalé entre le carter de protection 44 et la paroi inférieure 9B du réservoir. L'élément de filtration acoustique permet d'améliorer l'isolation phonique de l'habitacle, ce qui est particulièrement utile lorsque le véhicule comprend un groupe motopropulseur électrique puisqu'un tel groupe motopropulseur est très silencieux en fonctionnement. L'élément de filtration acoustique peut par exemple comprendre une couche de feutre et/ou de mousse.

En référence à la figure 5, on observe également que la batterie électrochimique 5 s'étend à l'avant du réservoir 2 selon l'axe longitudinal X. La batterie électrochimique 5 s'étend notamment entre les deux longerons 11A, 11B et est fixée aux deux longerons 11A, 11B. La batterie électrochimique 5 comprend une paroi inférieure tournée vers le sol Le véhicule peut comprendre un deuxième carter de protection (non représenté) configuré pour protéger la paroi inférieure de la batterie électrochimique. Le carter de protection 44 peut être fixé au deuxième carter de protection. Un chevauchement entre le carter de protection 44 et le deuxième carter de protection peut également être prévu afin d'améliorer la protection.

Avantageusement, la structure 6 du réservoir 2 est en matériau composite. Un tel matériau est plus léger que l'acier et même que tout autre métal pour une résistance équivalente. De plus, les procédés de fabrication de composant en matériau composite permettent de réaliser des structures 6 avec une grande diversité de formes géométriques. Des formes de structure 6 plus complexes que celles obtenues en métal peuvent ainsi être envisagées de manière à exploiter tout volume disponible du véhicule et ainsi augmenter la contenance du réservoir. Des formes plus complexes de réservoir peuvent en particulier être préconisées lorsque les réservoirs sont destinés à stocker un gaz sous pression plutôt qu'un liquide car, contrairement à un liquide, le gaz ne présente pas de risque de rétention dans le réservoir.

Le matériau composite peut comprendre une structure drapée ou préformée, et/ou des matériaux tressés et imprégnés de résine. Le matériau composite peut être constitué à base d'éléments de renforcement et d'une matrice. Les éléments de renforcement peuvent comprendre des fibres de carbone ou de verre, qui sont des matériaux légers ou encore du Kevlar (marque déposée) qui présente une plus grande résistance aux chocs. La matrice peut être une matrice organique, par exemple de la résine époxyde, de la résine phénolique ou un polyester modifié. La matrice peut également être une matrice métallique.

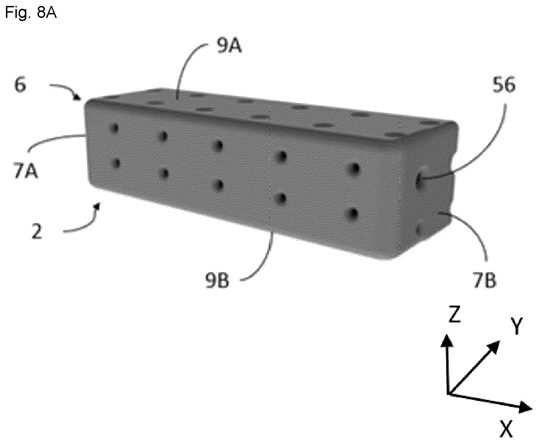

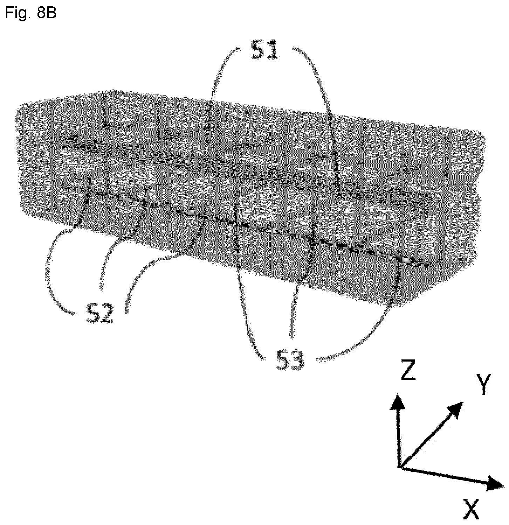

Les figures 8A et 8B illustrent en vue de perspective la structure 6 d'un mode de réalisation du réservoir 2. Les parois 7A et 7B sont reliées l'une à l'autre par un premier ensemble d'éléments de liaison 51 s'étendant parallèlement à l'axe X. De même, les parois 8A et 8B sont reliées l'une à l'autre par un deuxième ensemble d'éléments de liaison 52 s'étendant parallèlement à l'axe Y et les parois 9A et 9B sont reliées l'une à l'autre par un troisième ensemble d'éléments de liaison 53 s'étendant parallèlement à l'axe Z.

Selon une variante de réalisation, le réservoir 2 pourrait ne comprendre qu'un seul ensemble d'éléments de liaison ou seulement deux ensembles d'éléments de liaison parmi les trois ensembles d'éléments de liaison 51, 52, 53. En variante, tout ou partie des ensembles d'éléments de liaison 51, 52, 53 pourraient s'étendre dans des directions différentes des axes X, Y et Z, pourvu que l'axe selon lequel chacun des ensembles d'éléments de liaison s'étend forme un angle non nul avec l'axe selon lequel les autres ensembles d'éléments de liaison s'étendent. Avantageusement, les trois axes selon lesquels s'étendent les trois ensembles d'éléments de liaison 51, 52 et 53 sont perpendiculaires entre eux de manière à rigidifier le réservoir de manière optimale.

Les éléments de liaison 51, 52, 53 traversent le réservoir 2 de part en part entre deux parois opposées. Les éléments de liaison agissent comme des tirants renforçant la résistance du réservoir : ils sont sollicités en traction lorsque le fluide énergétique contenu dans le réservoir exerce une pression sur les parois 7A, 7B, 8A, 8B, 9A et 9B. Les éléments de liaison 51, 52, 53 sont agencés à l'intérieur de l'enveloppe du réservoir 2 et non en périphérie de cette enveloppe.

De préférence, chaque élément de liaison est distinct des autres éléments de liaison, c'est-à-dire que les éléments de liaison sont sans contact entre eux ne se touchent pas à l'intérieur du réservoir. Ainsi, le réservoir 2 n'est pas compartimenté et le fluide énergétique peut circuler facilement à l'intérieur du réservoir 2.

Les éléments de liaison 51, 52, 53 sont creux. Notamment, les éléments de liaison, que l'on pourrait également dénommer "puits de renfort", peuvent être des tubes lorsqu'ils présentent une section circulaire. Toutefois, la section des éléments de liaison n'est pas nécessairement circulaire. Par exemple, la section des éléments de liaison pourrait aussi être carrée, rectangulaire, polygonale ou ovoïde.

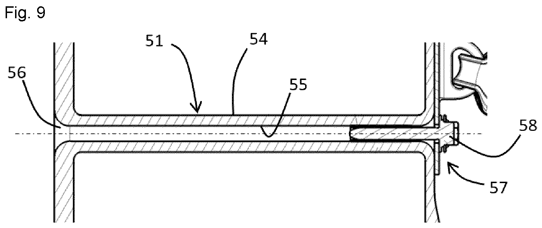

La figure 9 illustre plus en détail un élément de liaison 51, les autres éléments de liaison étant conçus de manière analogue. Chaque élément de liaison 51, 52, 53 comprend une forme tubulaire pourvue d'une face externe 54 et d'une face interne 55. La face externe 54 est tournée vers l'intérieur du réservoir et est donc destinée à être en contact avec le fluide énergétique, tandis que la face interne 55 communique avec l'extérieur du réservoir et est donc destinée à être en contact avec l'air ambiant.

Les éléments de liaison 51, 52, 53 peuvent être constitués de matériau composite ou de métal. Ils peuvent aussi comprendre à la fois un matériau composite et du métal. Ils peuvent notamment comprendre un tube métallique agencé à l'intérieur d'une structure en matériau composite.

La face interne 55 peut être prévue dans un matériau différent de celui formant la structure 6 du réservoir. La face interne 55 peut notamment être équipée d'un tube métallique qui s'étend sur toute la longueur de l'élément de liaison 51, 52, 53 ou seulement au niveau des extrémités des éléments de liaison 51, 52, 53. Le tube métallique peut éventuellement être annelé sur son pourtour extérieur de manière à garantir un bon maintien dans la structure 6.

Chaque élément de liaison 51, 52, 53 comprend deux extrémités opposées au niveau des deux parois opposées qu'il relie. En raison du caractère creux des éléments de liaison, le réservoir comprend, pour chaque élément de liaison, une ouverture 56 traversant le réservoir de part en part. Ces ouvertures 56 ne communiquent pas avec le volume de stockage de fluide énergétique. Ces ouvertures 56 ne sont donc pas utiles pour délivrer un fluide énergétique, notamment pour délivrer de l'hydrogène sous pression à la pile à combustible 3.

En revanche, les ouvertures 56 peuvent être utilisées pour le passage de fils électriques et/ou de conduits hydrauliques. On peut ainsi économiser l'espace prévu à l'extérieur du réservoir pour le passage de ces fils électriques et/ou de ces conduits hydrauliques tout en leur offrant un moyen de maintien en position.

Les ouvertures 56 peuvent également être utilisées pour permettre l'évacuation d'un liquide hors du véhicule, voire même pour réaliser des aérations visant à refroidir ou à réchauffer l'habitacle.

Avantageusement, et comme expliqué ci-après, les ouvertures 56 peuvent être utilisées pour fixer différents équipements du véhicule. En particulier, les ouvertures 56 sont utilisées pour fixer les sièges 12, les moyens d'ancrage 21, 22 des dispositifs de sécurité, le cadre 28 de carrosserie, le dispositif d'absorption de chocs 30, les éléments 41A, 41B des trains de roues, et le carter de protection 44 tels que décrits précédemment.

A cet effet, le réservoir 2 comprend un ensemble d'interfaces de fixation 57, chacune agencée à une extrémité d'au moins un élément de liaison 51, 52, 53, notamment agencée dans une extrémité d'une ouverture 56. Comme illustré sur la figure 9, tout ou partie des interfaces de fixation 57 peut comprendre un insert destiné à coopérer avec une vis de fixation 58, par exemple une vis de fixation de type M8 ou M10. L'insert peut être formé dans le tube métallique équipant la face interne 55 des éléments de liaison ou être un élément additionnel emmanché contre la face interne 55 des éléments de liaison, par exemple une cheville en plastique. L'insert peut par exemple comprendre une longueur comprise entre 20mm et 60mm inclus. L'insert peut être taraudé ou non taraudé. L'insert fourni ainsi un moyen de fixation s'étendant profondément dans le volume du réservoir. Un tel moyen de fixation est particulièrement robuste et permet d'envisager la fixation de charges importantes.

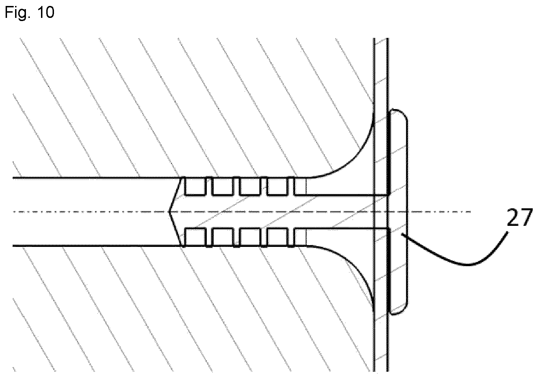

Comme illustré sur la figure 10, tout ou partie des interfaces de fixation 57 peut comprendre un insert destiné à coopérer avec une agrafe 59. L'agrafe 59 peut comprendre des ailettes radiales en interférence avec l'insert tubulaire et être emmanchée en force dans cet insert. En variante, l'agrafe 59 pourrait comprendre toute autre forme. Elle pourrait par exemple être destinée à être emmanchée en force et à être dévissée pour être retirée. En complément, de la colle ou du mastic peuvent être appliqués dans une ouverture 56 pour améliorer la tenue de la vis de fixation 58 ou de l'agrafe 59. L'utilisation d'agrafes 59 pourra être préférée à l'utilisation de vis de fixation pour fixer des équipements présentant une masse modérée et autres que des dispositifs de sécurité, par exemple pour fixer le carter de protection 44.

Chaque interface de fixation 57 permet de fixer un équipement du véhicule contre une paroi du réservoir. Une interface de fixation 57 peut être agencée à l'extrémité de l'ouverture 56 située du côté de la paroi contre laquelle l'équipement est fixé. Alternativement, une interface de fixation 57 pourrait aussi être agencée à l'extrémité de l'ouverture 56 située du côté opposé de la paroi contre laquelle l'équipement est fixé. Dans ce cas, un axe ou un câble reliant l'interface de fixation 57 à l'équipement pourrait s'étendre à l'intérieur de l'ouverture 56 le long de celle-ci. Un tel agencement permettrait par exemple de prévoir des interfaces de fixation au niveau de la paroi inférieure 9B pour fixer des équipements contre la paroi supérieure 9A, ce qui faciliterait les opérations d'assemblage du véhicule ou de maintenance.

De préférence, on utilise une ou plusieurs interfaces de fixation agencées sur les parois latérales 8A et 8B pour fixer respectivement les longerons 11A et 11B. On utilise une ou plusieurs interfaces de fixation agencées sur la paroi supérieure 9A pour fixer le siège 12 et/ou les moyens d'ancrage 21, 22 et/ou le cadre 28 de carrosserie. On utilise une ou plusieurs interfaces de fixation agencées sur la paroi arrière 7B pour fixer le dispositif d'absorption des chocs 30. On utilise une ou plusieurs interfaces de fixation agencées sur la paroi inférieur 9B pour fixer le carter de protection 44.

Avantageusement, de telles interfaces de fixation 57 peuvent être prévues aux extrémités de chaque ouverture 56 du réservoir. Chaque élément de liaison 51, 52, 53 peut ainsi supporter deux interfaces de fixation 57 agencées sur deux faces opposées du réservoir. Le réservoir peut ainsi être pourvu d'une multitude d'interfaces de fixation 57 permettant de fixer divers équipements en des positions très variées.

Un même équipement peut même être fixé au réservoir 2 en utilisant deux interfaces de fixations ou même davantage, de manière à bien sécuriser sa fixation. Un même équipement peut aussi facilement être fixé en des positions différentes du réservoir, sans devoir être modifié.

Un même réservoir 2 peut aussi être facilement réutilisé pour différents modèles de véhicule car la multitude d'interfaces de fixation fournit de nombreuses possibilités pour fixer des équipements.

Les ouvertures 56 qui ne sont pas destinées à fixer un équipement du véhicule peuvent être bouchées avec un moyen d'obturation de manière à éviter l'accumulation de boue, sable, terre, cailloux ou toutes autres particules. En particulier, les ouvertures 56 inutilisées peuvent être obturées avec des bouchons individuels ou avec un film entourant l'ensemble du réservoir ou tout autre dispositif de protection. Les ouvertures 56 inutilisées peuvent éventuellement être utilisées au cours de la vie du véhicule par exemple pour fixer un nouvel équipement ou un nouvel accessoire. Dans le cadre d'une opération de maintenance, on peut envisager de démonter un équipement, par exemple le dispositif d'absorption de chocs 30, et de le remplacer par un nouvel équipement neuf qui serait fixé en utilisant des interfaces de fixation jusqu'alors inutilisées.

Avantageusement, les éléments de liaison 51, 52, 53 sont répartis selon un pas régulier, par exemple un pas compris entre 5 cm et 30 cm inclus, notamment entre 10cm et 20 cm inclus. Par conséquent, les interfaces de fixation 57 sont réparties sur les parois du réservoir selon un pas régulier. Les interfaces de fixation 57 sont ainsi agencées selon un quadrillage en surface du réservoir 2. Ceci facilite encore la réutilisation d'un même réservoir et d'un même équipement pour différents modèles de véhicule car ce même équipement peut être fixé en plusieurs endroit du réservoir sans nécessiter de pièce d'adaptation. Le réservoir forme ainsi une structure modulaire, comme une brique de Lego^{®}, sur laquelle de nombreux équipements peuvent être fixés. L'invention permet donc d'envisager une grande liberté de conception des véhicules automobiles tout en réalisant des économies d'échelle.

Pour fabriquer le véhicule 1, on peut tout d'abord fabriquer un châssis en assemblant notamment le réservoir 2 aux longerons 11A, 11B. Ensuite on peut fixer différents équipements du véhicule sur le réservoir 2. En particulier, on fixe sur le réservoir 2 les sièges 12, les moyens d'ancrage 21, 22 des dispositifs de sécurité, le cadre 28 de carrosserie, le dispositif d'absorption de chocs 30, les éléments 41A, 41B des trains de roues, et le carter de protection 44 tels que décrits précédemment au moyen des interfaces de fixation 57. L'assemblage du réservoir intervient donc avant la fixation de ces différents équipements dans le procédé de fabrication du véhicule. La fixation de ces différents équipements peut être réalisée simplement par vissage des vis de fixation 58 ou par emmanchement des agrafes 59. Les opérations de maintenance requérant le démontage de ces équipements sont également facilitées.

Finalement, grâce à l'invention, on bénéfice d'un véhicule équipé d'un réservoir pour un fluide énergétique qui est plus léger car on économise une partie du châssis métallique dont les véhicules sont habituellement pourvus. Le véhicule offre également plus d'espace pour les passagers ou pour du rangement car le réservoir occupe une partie du volume auparavant occupé par le châssis. Alternativement, ce volume disponible peut aussi être mis à profit pour augmenter la taille du réservoir et donc pour proposer un véhicule avec une plus grande autonomie. Enfin, le réservoir fournit un support particulièrement pratique pour fixer une grande diversité d'équipements embarqués dans le véhicule.

## Revendications

1. Châssis (10) pour un véhicule, comprenant un premier longeron (11A), un deuxième longeron (11B) et un réservoir (2) destiné à stocker un fluide énergétique, les longerons s'étendant parallèlement à un axe longitudinal (X), **caractérisé en ce que** le réservoir est agencé dans un prolongement des longerons suivant l'axe longitudinal et fixé aux longerons (11A, 11B), le réservoir est destiné à supporter une charge exercée par au moins un équipement embarqué dans le véhicule et/ou par des éléments de carrosserie du véhicule.

2. Châssis (10) selon la revendication précédente, **caractérisé en ce que** les longerons (11A, 11B) sont fixés respectivement contre deux parois latérales opposées (8A, 8B) du réservoir (2).

3. Châssis (10) selon l'une des revendications précédentes, **caractérisé en ce que** le réservoir (2) comprend une paroi supérieure (9A) pourvu d'un renfoncement (13) destiné à recevoir l'assise d'au moins un siège.

4. Châssis (10) selon l'une des revendications précédentes, **caractérisé en ce que** le réservoir (2) comprend un dispositif anti sous-marinage (17) configuré pour empêcher une assise d'un siège de glisser vers l'avant en cas d'accident.

5. Agencement pour un véhicule, comprenant un châssis selon l'une des revendications précédentes, l'agencement comprenant en outre au moins un équipement et/ou des éléments de carrosserie supportés par le réservoir (2) et fixés au réservoir.

6. Agencement selon la revendication précédente, **caractérisé en ce qu'**il comprend au moins un équipement supporté par le réservoir (2) et fixé au réservoir, l'au moins un équipement comprenant au moins un siège (12) et/ou un dispositif de sécurité destiné à maintenir un passager en cas d'accident.

7. Agencement selon l'une des revendications 5 ou 6, **caractérisé en ce qu'**il comprend:
- un moyen d'ancrage (21) pour une ceinture de sécurité fixé à une paroi supérieure (9A) du réservoir, et/ou
- un moyen d'ancrage (22) selon la norme ISO 13216-1:1999 fixé à une paroi supérieure (9A) du réservoir.

8. Agencement selon la revendication précédente, **caractérisé en ce que** le réservoir (2) comprend une paroi supérieure (9A) pourvue d'un renfoncement (13) destiné à recevoir l'assise d'au moins un siège, et **en ce que**:
- le moyen d'ancrage (21) pour une ceinture de sécurité fixé est fixé à un fond (15) du renfoncement (13), et/ou
- le moyen d'ancrage (22) selon la norme ISO 13216-1:1999 comprend un arceau (24) s'étendant horizontalement à l'aplomb du renfoncement.

9. Agencement selon l'une des revendications 5 à 8, **caractérisé en ce qu'**il comprend des éléments de carrosserie supportés par le réservoir (2) et fixés à une moitié arrière du réservoir, les longerons étant fixés à une moitié avant du réservoir.

10. Véhicule (1), notamment véhicule automobile, **caractérisé en ce qu'**il comprend un châssis (10) selon l'une des revendications 1 à 4 et/ou un agencement selon l'une des revendications 5 à 9.

## Patentansprüche

1. Fahrgestell (10) für ein Fahrzeug, umfassend einen ersten Längsträger (11A), einen zweiten Längsträger (11B) und einen Tank (2), der zum Speichern einer energetischen Flüssigkeit bestimmt ist, wobei sich die Längsträger parallel zu einer Längsachse (X) erstrecken, **dadurch gekennzeichnet, dass** der Tank in einer Verlängerung der Längsträger entlang der Längsachse angeordnet ist und an den Längsträgern (11A, 11B) befestigt ist, wobei der Tank dazu bestimmt ist, eine Last zu tragen, die von mindestens einer in dem Fahrzeug mitgeführten Ausrüstung und/oder von Karosserieelementen des Fahrzeugs ausgeübt wird.

2. Fahrgestell (10) nach dem vorhergehenden Anspruch, **dadurch gekennzeichnet, dass** die Längsträger (11A, 11B) jeweils an zwei entgegengesetzten Seitenwänden (8A, 8B) des Tanks (2) befestigt sind.

3. Fahrgestell (10) nach einem der vorhergehenden Ansprüche, **dadurch gekennzeichnet, dass** der Tank (2) eine obere Wand (9A) umfasst, die mit einer Vertiefung (13) versehen ist, die dazu bestimmt ist, den Sitzteil mindestens eines Sitzes aufzunehmen.

4. Fahrgestell (10) nach einem der vorhergehenden Ansprüche, **dadurch gekennzeichnet, dass** der Tank (2) eine Anti-Submarining-Vorrichtung (17) umfasst, die dazu ausgebildet ist, bei einem Unfall ein Rutschen eines Sitzteils eines Sitzes zum Bug hin zu verhindern.

5. Anordnung für ein Fahrzeug, umfassend ein Fahrgestell nach einem der vorhergehenden Ansprüche, wobei die Anordnung ferner mindestens eine Ausrüstung und/oder Karosserieelemente umfasst, die von dem Tank (2) getragen werden und an dem Tank befestigt sind.

6. Anordnung nach dem vorhergehenden Anspruch, **dadurch gekennzeichnet, dass** sie mindestens eine Ausrüstung umfasst, die von dem Tank (2) getragen wird und an dem Tank befestigt ist, wobei die mindestens eine Ausrüstung mindestens einen Sitz (12) und/oder eine Sicherheitsvorrichtung, die dazu bestimmt ist, einen Fahrgast bei einem Unfall zu halten, umfasst.

7. Anordnung nach einem der Ansprüche 5 oder 6, **dadurch gekennzeichnet, dass** sie umfasst:
- eine Verankerungseinrichtung (21) für einen Sicherheitsgurt, die an einer oberen Wand (9A) des Tanks befestigt ist, und/oder
- eine Verankerungseinrichtung (22) nach der Norm ISO 13216-1:1999, die an einer oberen Wand (9A) des Tanks befestigt ist.

8. Anordnung nach dem vorhergehenden Anspruch, **dadurch gekennzeichnet, dass** der Tank (2) eine obere Wand (9A) umfasst, die mit einer Vertiefung (13) versehen ist, die dazu bestimmt ist, den Sitzteil mindestens eines Sitzes aufzunehmen, und dadurch, dass:
- die befestigte Verankerungseinrichtung (21) für einen Sicherheitsgurt an einem Boden (15) der Vertiefung (13) befestigt ist, und/oder
- die Verankerungseinrichtung (22) nach der Norm ISO 13216-1:1999 einen Bügel (24) umfasst, der sich horizontal lotrecht zu der Vertiefung erstreckt.

9. Anordnung nach einem der Ansprüche 5 bis 8, **dadurch gekennzeichnet, dass** sie Karosserieelemente umfasst, die von dem Tank (2) getragen werden und an einer hinteren Hälfte des Tanks befestigt sind, wobei die Längsträger an einer vorderen Hälfte des Tanks befestigt sind.

10. Fahrzeug (1), insbesondere Kraftfahrzeug, **dadurch gekennzeichnet, dass** es ein Fahrgestell (10) nach einem der Ansprüche 1 bis 4 und/oder eine Anordnung nach einem der Ansprüche 5 bis 9 umfasst.

## Claims

1. Chassis (10) for a vehicle, comprising a first side member (11A), a second side member (11B) and a tank (2) intended to store an energetic fluid, the side members extending parallel to a longitudinal axis (X), **characterized in that** the tank is arranged in a continuation of the side members along the longitudinal axis and fastened to the side members (11A, 11B), the tank is intended to withstand a load exerted by at least one item of equipment on board the vehicle and/or by body elements of the vehicle.

2. Chassis (10) according to the preceding claim, **characterized in that** the side members (11A, 11B) are fastened respectively against two opposite lateral walls (8A, 8B) of the tank (2).

3. Chassis (10) according to either of the preceding claims, **characterized in that** the tank (2) comprises an upper wall (9A) provided with a recess (13) intended to receive the squab of at least one seat.

4. Chassis (10) according to one of the preceding claims, **characterized in that** the tank (2) comprises an anti-submarining device (17) configured to prevent a squab of a seat from sliding forward in the event of an accident.

5. Arrangement for a vehicle, comprising a chassis according to one of the preceding claims, the arrangement further comprising at least one item of equipment and/or body elements supported by the tank (2) and fastened to the tank.

6. Arrangement according to the preceding claim, **characterized in that** it comprises at least one item of equipment supported by the tank (2) and fastened to the tank, the at least one item of equipment comprising at least one seat (12) and/or a safety device intended to safeguard a passenger in the event of an accident.

7. Arrangement according to either of Claims 5 and 6, **characterized in that** it comprises:
- an anchoring means (21) for a seat belt, fastened to an upper wall (9A) of the tank, and/or
- an anchoring means (22) according to standard ISO 13216-1:1999 fastened to an upper wall (9A) of the tank.

8. Arrangement according to the preceding claim, **characterized in that** the tank (2) comprises an upper wall (9A) provided with a recess (13) intended to receive the squab of at least one seat, and **in that**:
- the fastened anchoring means (21) for a seat belt is fastened to a bottom (15) of the recess (13), and/or
- the anchoring means (22) according to standard ISO 13216-1:1999 comprises a hoop (24) extending horizontally in line with the recess.

9. Arrangement according to one of Claims 5 to 8, **characterized in that** it comprises body elements supported by the tank (2) and fastened to a rear half of the tank, the side members being fastened to a front half of the tank.

10. Vehicle (1), notably a motor vehicle, **characterized in that** it comprises a chassis (10) according to one of Claims 1 to 4 and/or an arrangement according to one of Claims 5 to 9.
